# EUROPÄISCHE PATENTSCHRIFT

(11) **EP 2 822 816 B1**
(45) Veröffentlichungstag und Bekanntmachung des Hinweises auf die Patenterteilung: **07.09.2016**
(21) Anmeldenummer: 13717178.1
(22) Anmeldetag: 06.03.2013
(51) Int. Cl.: B60R 21/233, B60R 21/36, B60R 21/237

(54) **GASSACKANORDNUNG FÜR EIN KRAFTFAHRZEUG UND VERFAHREN ZUM HERSTELLEN EINER GASSACKANORDNUNG**
VEHICLE AIRBAG AND METHOD OF PROCUDING SUCH AN AIRBAG
COUSSIN GONFLABLE POUR VÉHICULE ET PROCÉDÉ DE FABRICATION D'UN TEL COUSSIN

(30) Priorität: 08.03.2012 DE 102012203704
(43) Veröffentlichungstag der Anmeldung: 14.01.2015
(73) Patentinhaber: Takata AG, 63743 Aschaffenburg (DE)
(72) Erfinder: LI, Wucai, 10777 Berlin (DE)
(74) Vertreter: Maikowski & Ninnemann Patentanwälte Partnerschaft mbB
(86) Internationale Anmeldenummer: PCT/EP2013/054498
(87) Internationale Veröffentlichungsnummer: WO 2013/131954

(56) Entgegenhaltungen:
- WO-A1-2008/047599
- WO-A1-2011/077510
- DE-A1-102005 049 209
- US-A- 5 975 564

## Beschreibung

Die Erfindung betrifft eine Gassackanordnung gemäß Anspruch 1 mit einem zum Schutz einer Person entfaltbaren Gassack sowie ein Verfahren zum Herstellen einer Gassackanordnung gemäß Anspruch 15.

Aus der DE 10 2005 049 209 A1 ist eine aus mehreren Kammern gebildeter Gassack bekannt, wobei die Kammern jeweils über eine gemeinsame, in Fahrzeugquerrichtung orientierte Befüllkammer befüllt werden und sich annähernd im rechten Winkel zur Befüllkammer erstrecken. Zur Verringerung der Eindringtiefe eines Körperteils der zu schützenden Person (speziell ihres Kopfes) wird eine Umhüllung verwendet, welche die Kammern überdeckt und als Lastverteiler wirkt. Nachteilig an derartigen Gassäcken ist, dass bei einem Auftreffen eines Körperteils der zu schützenden Person auf einen Bereich zwischen den Kammern die lastverteilende Wirkung der Umhüllung erst nach Eindringen des Körperteils bis zu einer bestimmten Tiefe eintritt, nämlich nachdem sich in den Kammern ein bestimmter Gegendruck aufgebaut hat.

Dies bedeutet, dass der Weg bis zum Aufbau des Gegendruckes mehr oder weniger für den Energieabbau ungenutzt bleibt und zur Verhinderung des Durchschlagens des Körperteils auf die Windschutzscheibe nur noch wenig Restweg zur Verfügung steht. Kompensiert werden muss dies durch einen erhöhten Gassackinnendruck, was die Belastung der auf den Gassack aufprallenden Person erhöht.

Aus der US 5,975,564 ist eine Gassackanordnung gemäß dem Oberbegriff des Anspruchs 1 bekannt.

Das der Erfindung zugrunde liegende Problem besteht darin, eine Gassackanordnung zu schaffen, die einen effizienteren Schutz ermöglicht und gleichzeitig möglichst einfach herstellbar ist.

Dieses Problem wird durch die Gassackanordnung mit den Merkmalen des Anspruchs 1 und durch das Verfahren gemäß Anspruch 15 gelöst. Weiterbildungen der Erfindung sind in den abhängigen Ansprüchen angegeben.

Danach wird eine Gassackanordnung für ein Kraftfahrzeug bereitgestellt, mit
- einem Gassack, der zum Schutz einer Person entfaltbar ist, wobei
- der Gassack mindestens zwei aufblasbare Kammern aufweist, die durch eine Seitenwand voneinander getrennt sind, und wobei
- die Kammern durch mindestens eine gemeinsame Materiallage begrenzt sind, und die Materiallage einen in Falten gelegten Bereich aufweist, der im aufgeblasenen Zustand des Gassacks zumindest einen Abschnitt der Seitenwand ausbildet.

Beispielsweise dient die Gassackanordnung dem Passantenschutz, wobei der Gassack zum Schutz einer sich außerhalb des Fahrzeugs befindlichen Person entlang zumindest eines Teilabschnitts der Frontscheibe und/oder eines sonstigen Abschnitts einer Außenseite des Kraftfahrzeugs entfaltbar ist und im nicht entfalteten Zustand z.B. unter einer Motorhaube des Fahrzeugs untergebracht ist. Denkbar ist jedoch auch, dass die erfindungsgemäße Gassackanordnung zum Schutz eines Fahrzeuginsassen ausgebildet ist, z.B. als Seitengassackanordnung (Vorhanggassackanordnung) oder mit einem sitzintegrierten Gassack.

Gemäß einer Ausgestaltung der Erfindung sind die Falten des in Falten gelegten Bereichs in mindestens einem Abschnitt des in Falten gelegten Bereichs an der Materiallage selber und/oder einer weiteren Materiallage des Gassacks fixiert. Die weitere Materiallage begrenzt z.B. ebenfalls die aufblasbaren Kammern oder ein sonstiges befüllbares Volumen des Gassacks. Die Fixierung der Falten erfolgt in einem Abschnitt des in Falten gelegten Bereichs insbesondere dauerhaft, d.h. derart, dass die Falten im Bereich des dem Befüllabschnitt (s.u.) zugewandten Endes des in Falten gelegten Bereichs auch nach Aufblasen des Gassacks noch fixiert sind.

Der Gassack der erfindungsgemäßen Gassackanordnung kann darüber hinaus einen Befüllabschnitt aufweisen, über den durch einen Gasgenerator freigesetztes Gas in seine Kammern geleitet werden kann. In den Befüllabschnitt mündet z.B. ein Einblasmund des Gassacks, über den der Gasgenerator mit dem Gassack gekoppelt ist. Des Weiteren kann sich der Befüllabschnitt über mehrere (insbesondere über sämtliche) Kammern des Gassacks erstrecken, d.h. die Kammern werden über den gemeinsamen Befüllabschnitt befüllt.

Der Befüllabschnitt ist insbesondere im unteren Bereich des Gassacks ausgebildet, so dass er sich im aufgeblasenen Zustand des Gassacks z.B. in Fahrzeugquerrichtung angrenzend an die Motorhaube des Fahrzeugs erstreckt.

Der in Falten gelegte Bereich erstreckt sich im flach ausgebreiteten und unaufgeblasenen Zustand des Gassacks z.B. länglich und ist etwa zumindest näherungsweise senkrecht zu dem Befüllabschnitt orientiert. Entsprechend verlaufen die Kammern im aufgeblasenen Gassacks z.B. ebenfalls länglich (und z.B. auch zumindest näherungsweise parallel zueinander), d.h. sie weisen jeweils in einer Richtung eine größere Ausdehnung auf (z.B. eine mindestens zweimal größere Ausdehnung) als senkrecht zu dieser Richtung. Insbesondere sind die Kammern so angeordnet, dass sie - bezogen auf den im Fahrzeug montierten und aufgeblasenen Zustand des Gassacks - zumindest näherungsweise senkrecht zur Fahrzeugquerrichtung bzw. zum Befüllabschnitt - orientiert sind. Selbstverständlich sind auch andere Ausrichtungen der Kammern und damit des in Falten gelegten Bereichs möglich. Der in Falten gelegte Bereich wird insbesondere per Zick-Zack-Faltung erzeugt.

Gemäß einer weiteren Variante der Erfindung sind die Falten des in Falten gelegten Bereichs in einem dem Befüllabschnitt zugewandten Ende des in Falten gelegten Bereich (insbesondere dauerhaft) fixiert. Die Fixierung erfolgt insbesondere mittels einer Naht, die die Falten durchsetzt und diesen Bereich an der übrigen Materiallage oder einer weiteren Materiallage des Gassacks festlegt.

Denkbar ist, dass die Materiallage durch einen ersten und einen zweiten Materialzuschnitt, d.h. durch zwei zunächst zueinander separate Zuschnitte, gebildet ist, die über mindestens eine Naht (etwa in Form einer Kleb- oder Nähnaht) miteinander verbunden sind. Beispielsweise begrenzt der zweite Materialzuschnitt den Befüllabschnitt, wobei das dem Befüllabschnitt zugewandte Ende des in Falten gelegten Bereichs gleichzeitig über die Naht, die den ersten und den zweiten Materialzuschnitt verbindet, fixiert ist.

Alternativ oder zusätzlich können die Falten des in Falten gelegten Bereichs in einem dem Befüllabschnitt abgewandten Ende des in Falten gelegten Bereichs fixiert sein. Denkbar ist insbesondere wie oben bereits erwähnt, dass der Gassack neben der Materiallage, die den in Falten gelegten Bereich aufweist, durch eine weitere Materiallage gebildet ist. Das dem Befüllabschnitt abgewandte Ende des in Falten gelegten Bereichs ist dann insbesondere sowohl mit der einen als auch mit der anderen (d.h. der weiteren) Materiallage verbunden, um die Falten in diesem Bereich zu fixieren. Beispielsweise sind die beiden Materiallagen über eine Umfangsnaht, die sich zumindest entlang eines Abschnittes des Umfanges der Materiallagen erstreckt, miteinander verbunden, wobei gleichzeitig das dem Befüllabschnitt abgewandte Ende des in Falten gelegten Bereichs über diese Umfangsnaht mit den beiden Materiallagen verbunden ist.

Beispielsweise erstreckt sich die Materiallage, die den in Falten gelegten Bereich aufweist, bezogen auf den aufgeblasenen und am Fahrzeug montierten Zustand des Gassacks, dem Fahrzeug zugewandt, d.h sie bildet, wenn es sich bei dem Gassack um einen Passantenschutzgassack handelt, eine (insbesondere der Windschutzscheibe zugewandte) untere Lage des Gassacks aus.

Entsprechend kann sich die weitere Materiallage - bezogen auf den aufgeblasenen und am Fahrzeug montierten Zustand des Gassacks - dem Fahrzeug abgewandt erstrecken, d.h. sie bildet insbesondere eine (der Windschutzscheibe abgewandte) Oberlage des Gassacks aus.

Darüber hinaus kann die Materiallage, die den in Falten gelegten Bereich aufweist, über mindestens eine Naht (weiter unten auch als "Längsnaht" bezeichnet), die parallel zu dem in Falten gelegten Bereich verläuft, mit der weiteren Materiallage verbunden sein. Insbesondere legt diese Naht die Materiallage außerhalb ihres in Falten gelegten Bereiches an der weiteren Materiallage fest.

Erfindungsgemäß ist zudem, dass die Materiallage mindestens zwei in Falten gelegte Bereiche aufweist, die im aufgeblasenen Zustand des Gassacks unter Bildung der Seitenwand zumindest abschnittsweise aneinander liegen (d.h. die Seitenwand ist zweilagig ausgeführt), wobei die besagte Naht zwischen den beiden in Falten gelegten Bereichen (aber z.B. zumindest näherungsweise parallel zu ihnen) verlaufen kann.

Möglich ist, dass mehrere Längsnähte vorgesehen sind, die in Gruppen verlaufen. Insbesondere ist jeweils eine Gruppe von Längsnähten einer Seitenwand einer Kammer des Gassacks zugeordnet, wobei die Längsnähte einer Gruppe im aufgeblasenen Zustand des Gassacks entlang derselben Seitenwand verlaufen.

Nach einer anderen Weiterbildung der Erfindung weist der Gassack mindestens eine bandartige Materiallage auf, die an der Materiallage, die den in Falten gelegten Bereich aufweist, festgelegt ist.

Beispielsweise erstreckt sich die bandartige Materiallage - bezogen auf den aufgeblasenen und am Fahrzeug montierten Zustand des Gassacks - zwischen der Materiallage, die den in Falten gelegten Bereich aufweist, und dem Fahrzeug (d.h. die bandartige Materiallage ist außen an dem Gassack befestigt). Denkbar ist allerdings auch, dass die bandartige Materiallage an einer Innenseite der Materiallage mit dem in Falten gelegten Bereich befestigt ist.

Insbesondere bildet die Materiallage, wie oben erwähnt, mehrere in Falten gelegte Bereiche aus, wobei die Materiallage über zwischen diesen Bereichen angeordnete Nähte an der bandartigen Materiallage festgelegt ist. Beispielsweise dienen diese Nähte zur Fixierung der Kammern (weshalb sie weiter unten auch als "Fixiernähte" bezeichnet werden), so dass sie im Bereich des aufblasbaren Volumens und nicht im Bereich der Seitenwand der Kammern verlaufen.

Denkbar ist zudem, dass die Kammern des Gassacks im befüllten Zustand einen annähernd rechteckigen Querschnitt aufweisen, wobei die Lagen der Seitenwände benachbarter Kammern wie oben erwähnt aneinander anliegen können und insbesondere gegeneinander gepresst werden. Hierdurch kann ein Gassack zur Verfügung gestellt werden, der im gesamten Auftreffbereich ein gleichmäßiges (nicht unbedingt identisches) Energieabsorptionsvermögen an den unterschiedlichen potentiellen Auftreffpunkten bietet (z.B. direkt auf einer Kammer und auf einem benachbarten Zwischenraum). Möglich ist, dass die Kammern des aufgeblasenen Gassacks eine senkrecht zur Haupterstreckungsebene des Gassacks (z.B. senkrecht zur Windschutzscheibe des Fahrzeugs) zumindest näherungsweise dieselbe Dicke aufweisen. Möglich ist auch, dass der gesamte Gassack eine zumindest im Wesentlichen konstante Dicke aufweist. Es ist aber auch möglich, dass der Querschnitt der Kammern (und damit auch das Energieabsorptionsvermögen) in der Haupterstreckungsebene des Gassacks sowohl in Fahrzeugquerrichtung als auch in einer Richtung senkrecht dazu variiert.

Der Kammerquerschnitt wird insbesondere bestimmt durch die Anzahl und Tiefe der Falten des in Falten gelegten Bereichs, den Abstand der Längsnahtgruppen zueinander, den Abstand der Fixiernähte zueinander sowie die Ausführung der Längsnähte. Beispielsweise verringert sich der Zwischenraum zwischen den Kammern im Bereich der Oberlage des Gassacks, wenn der Abstand der beiden äußeren Längsnähte einer Gruppe reduziert bzw. nur eine Längsnaht vorgesehen wird.

Das erwähnte Aneinanderpressen benachbarter Kammern wird auch noch durch die Dimensionierung der bandartigen Materiallage (die etwa in Form eines Spannbandes ausgebildet ist), speziell durch ihre Länge zwischen benachbarten Fixiernähten, bestimmt. Je kürzer diese Länge im Vergleich zum Abstand zwischen den Fixiernähten, der sich ergeben würde, wenn kein Spannband vorhanden ist, gewählt wird, desto stärker ist die Pressung. Über die Dimensionierung des Spannbandes kann auch die Krümmung des Gassackes in Fahrzeugquerrichtung beeinflusst werden, wodurch z.B. eine Anpassung des Gassacks an die Kontur der Windschutzscheibe möglich ist und eine optimale Anlage des entfalteten Gassackes an dieser geschaffen wird.

Die Erfindung betrifft auch ein Verfahren zum Herstellen einer Gassackanordnung, insbesondere gemäß einem der vorhergehenden Ansprüche, mit den Schritten:
- Bereitstellen einer Materiallage;
- Erzeugen mindestens eines in Falten gelegten Bereichs in der Materiallage;
- Herstellen eines Gassacks der Gassackanordnung unter Verwendung der Materiallage derart, dass die Materiallage mindestens zwei durch eine Seitenwand voneinander getrennte aufblasbare Kammern begrenzt, wobei der in Falten gelegte Bereich im aufgeblasenen Zustand des Gassacks zumindest einen Abschnitt der Seitenwand ausbildet, wobei der Gassack derart hergestellt ist, dass die Materiallage mindestens zwei im nicht aufgeblasenen Zustand des Gassacks in Falten gelegte Bereiche aufweist, die im aufgeblasenen Zustand des Gassacks unter Bildung der Seitenwand zumindest abschnittsweise aneinander liegen.

Die Erfindung wird im Folgenden anhand von Ausführungsbeispielen unter Bezugnahme auf die Figuren näher erläutert. Es zeigen:
- Fig. 1: eine an einem Kraftfahrzeug montierte Gassackanordnung gemäß einem Ausführungsbeispiel der Erfindung nach Aufblasen des Gassacks;
- Fig. 2: den Gassack der Gassackanordnung aus Fig. 1 in Draufsicht;
- Fig. 3: einen Schnitt durch den Gassack aus Fig. 2 entlang der Linie A-A, wobei sich der Gassack im unaufgeblasenen Zustand befindet;
- Fig. 4: den Gassack in der Darstellung der Fig. 3 nach dem Aufblasen;
- Fig. 5: eine Abwandlung des Gassacks aus den Fig. 2 bis 4;
- Fig. 6: einen Schnitt durch den Gassack aus Fig. 2 im aufgeblasenen Zustand entlang der Linie B-B; und
- Fig. 7: einen Schnitt durch den Gassack aus Fig. 2 im aufgeblasenen Zustand entlang der Linie C-C.

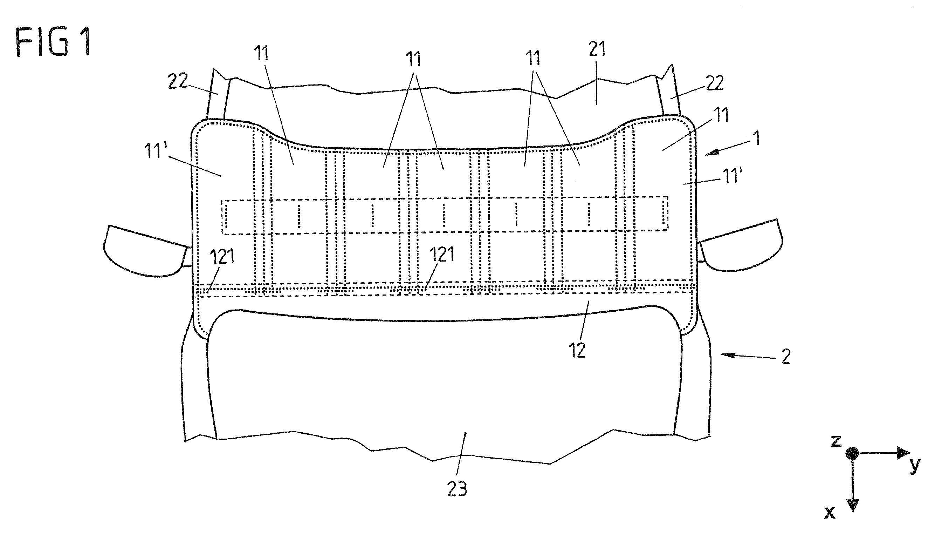

Die in Fig. 1 dargestellte Gassackanordnung umfasst einen Gassack 1, der sich zum Schutz eines Passanten entlang einer Windschutzscheibe 21 eines Fahrzeuges 2 entfaltet. Der Gassack 1 hat sich aus einem unterhalb einer Motorhaube 23 des Fahrzeugs befindlichen Unterbringungsraum heraus entfaltet und vor der Windschutzscheibe 21 positioniert. Die Breite das Gassacks 1 ist so bemessen, dass er die Windschutzscheibe 21 und auch die an die Windschutzscheibe angrenzenden A-Säulen 22 des Fahrzeugs 2 und damit zumindest den größten Teil des potentiellen Auftreffbereiches der zu schützende Person im Wesentlichen abdeckt.

Der Gassack 1 besitzt mehrere (in diesem Ausführungsbeispiel sieben) aufblasbare Kammern 11, 11' (Schutzkammern), die so angeordnet sind, dass sie im aufgeblasenen Zustand des Gassacks 1 entlang der Fahrzeugquerrichtung nebeneinander liegen. Die Kammern 11, 11' sind länglich ausgebildet und senkrecht zur Fahrzeugquerrichtung orientiert, d.h. sie weisen senkrecht zur Fahrzeugquerrichtung (und auch senkrecht zur Haupterstreckungsrichtung des Gassacks 1) eine größere Ausdehnung auf als in Fahrzeugquerrichtung. Denkbar ist jedoch auch, dass abweichend von der dargestellten Orientierung der Kammern 11, 11' zumindest einige der Kammern nicht senkrecht zur Fahrzeugquerrichtung orientiert sind, sondern z.B. geneigt oder parallel zur Fahrzeugquerrichtung verlaufen. Die beiden äußeren Kammern 11' weisen zur besseren Abdeckung der A-Säulen 22 eine größere Höhe bzw. Ausdehnung (entlang der Windschutzscheibe und senkrecht zur Fahrzeugquerrichtung gemessen) als die dazwischen angeordneten Kammern 11 auf.

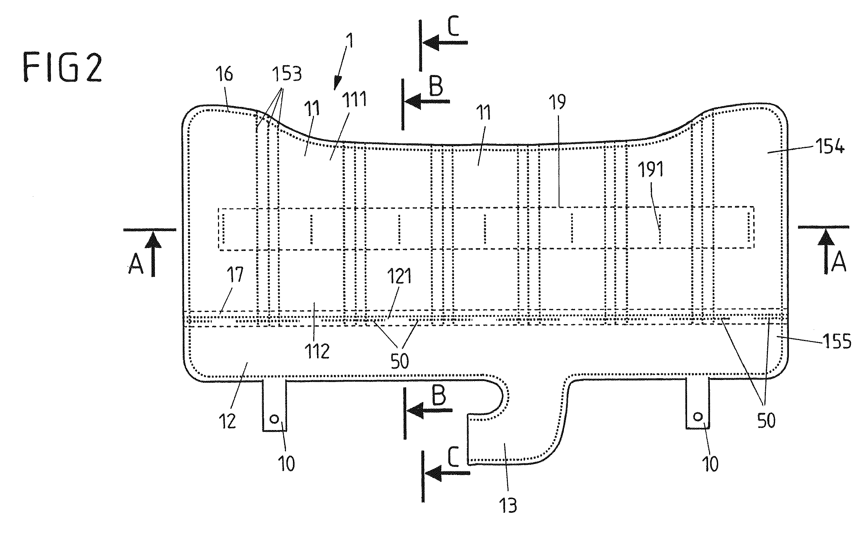

Wie insbesondere aus der Fig. 2 hervorgeht, die den Gassack 1 in einem flach ausgebreiteten Zustand zeigt, weist der Gassack 1 zudem einen in seinem unteren Bereich (d.h. in seinem im aufgeblasenen Zustand der Motorhaube 23 des Fahrzeugs 2 zugewandten Bereich) positionierten Befüllabschnitt in Form einer Befüllkammer 12 auf, über die die Kammern 11, 11' mit durch einen Gasgenerator (nicht dargestellt) freigesetztem Gas befüllt werden. Die Befüllkammer 12 deckt den unteren Bereich der Windschutzscheibe 21 sowie den daran angrenzenden Bereich des vorderen Teils des Kraftfahrzeugs ab, wobei sie sich teilweise unterhalb der Motorhaube 23 befindet.

Der Gasgenerator wird über einen Einblasmund 13 des Gassacks 1 angekoppelt. Die Befüllkammer 12 erstreckt im Wesentlichen über die gesamte Breite des Gassacks 1, so dass sämtliche Kammern 11, 11' über die Befüllkammer 12 befüllt werden, wobei sich zwischen der Befüllkammer 12 und den Kammern 11, 11' jeweils Überströmöffnungen 121 befinden, über die das Gas aus der Befüllkammer 12 in die Kammern 11, 11' gelangt.

Der Gassack 1 ist aus zwei Materiallagen in Form einer Oberlage 14 und einer unteren Lage 15 gebildet, von denen eine, die Oberlage 14, im aufgeblasenen Zustand des Gassacks 1 dem Fahrzeug abgewandt (d.h. der zu schützenden Person zugewandt) ist. Entsprechend ist die untere Lage 15 im aufgeblasenen Zustand des Gassacks 1 dem Fahrzeug zugewandt. Ober- und untere Lage 14, 15, die insbesondere im Wesentlichen deckungsgleich ausgebildet sind, sind über eine Umfangsnaht 16, die entlang eines Umfanges der beiden Lagen 14, 15 verläuft, miteinander verbunden.

Nach ihrem Verbinden bilden die beiden Lagen 14, 15 gemeinsam sowohl die Befüllkammer 12 als auch den aus einzelnen Kammern 11, 11' bestehenden Auftreffbereich des Gassackes 1. Der Einblasmund 13 ist ebenso wie vom Rand des Gassacks 1 nach außen abstehende Befestigungsbänder 10 zur Befestigung des Gassackes 1 am Fahrzeug aus den Zuschnitten für die Oberlage und die untere Lage 14, 15 gebildet. Alternativ dazu können sowohl der Einblasmund 13 als auch die Befestigungsbänder 10 als separate und mit dem Gassack verbundene (zB. angenäht) Komponenten ausgebildet sein.

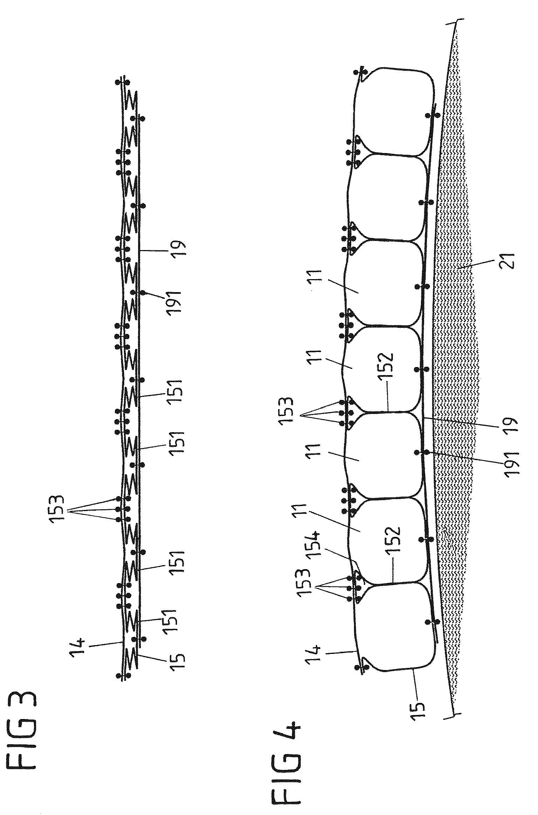

Die untere Lage 15 weist darüber hinaus eine Mehrzahl von (per Zick-Zack-Faltung) in Falten gelegten Bereichen 151 auf. Zur Herstellung der gefalteten Bereiche 151 werden Abschnitte der unteren Lage 15, die nach Aufblasen des Gassacks 1 Seitenwände 152 (vgl. Fig. 4) der Kammern 11, 11' ausbilden, mundharmonikaartig gefaltet und zwar derart, dass die Faltkanten in Richtung der Längserstreckung der Kammern 11, 11' (d.h. senkrecht zur Fahrzeugquerrichtung bzw. zur Haupterstreckungsrichtung des Gassacks 1) verlaufen und senkrecht zur Haupterstreckungsebene des Gassacks 1 (im flach ausgebreiteten Zustand) übereinander liegen.

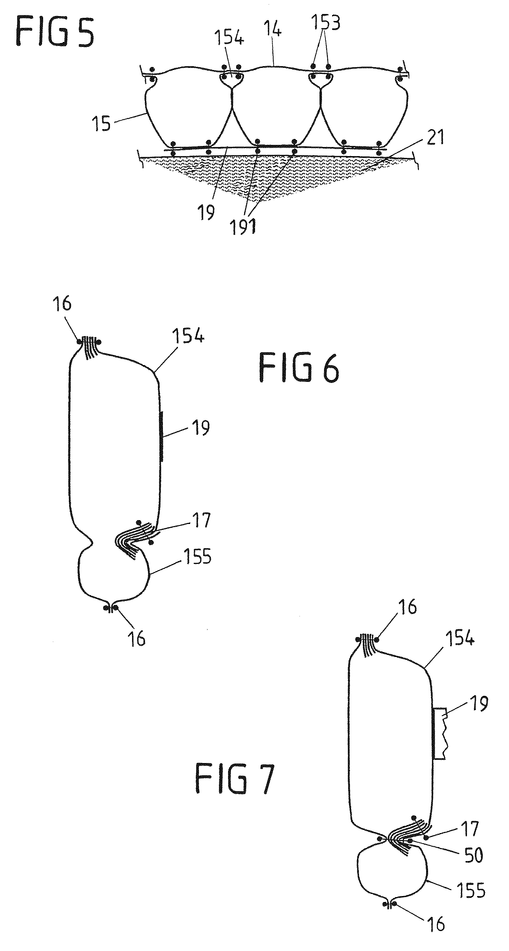

Die untere Lage 15 ist gemäß Fig. 6 aus einem ersten und einem zweiten Materialzuschnitt 154, 155 gebildet, wobei die beiden Materialzuschnitte 154, 155 über eine durchgehende Verbindungsnaht 17 miteinander verbunden sind. Vor dem Verbinden der Materialzuschnitte 154, 155 wird der eine Materialzuschnitt (der erste Materialzuschnitt 154, der sich im aufgeblasenen Gassack 1 in einem Abstand zur Motorhaube 23 befindet) abschnittsweise in Falten gelegt, um die gefalteten Bereiche 151 zu bilden. Nach Erzeugen der gefalteten Bereiche 151 weist der erste Materialzuschnitt 154 eine Breite auf, die der Breite der Oberlage 14 zumindest näherungsweise entspricht.

Nach dem Verbinden der Materialzuschnitte 154, 155 mittels der Verbindungsnaht 17 werden wie beschrieben die Oberlage 14 und die nunmehr im Wesentlichen deckungsgleiche untere Lage 15 entlang ihrer Kanten über die Umfangsnaht 16 miteinander verbunden. Mittels der Umfangsnaht 16 werden die gefalteten Bereiche 151 jeweils an ihren der Befüllkammer 12 abgewandten Enden an der Oberlage 14 und an der unteren Lage 15 fixiert und die Kammern 11, 11' an ihrem der Befüllkammer 12 abgewandten Enden verschlossen.

Die Verbindungsnaht 17 ist entlang der Fahrzeugquerrichtung orientiert. Insbesondere ist die Verbindungsnaht 17 so positioniert, dass sie sich jeweils durch die Faltung der gefalteten Bereiche 151 hindurcherstreckt und somit die Bereiche 151 in gefaltetem Zustand an dem Überlappungsbereich zwischen den beiden Materialzuschnitten 154, 155 festlegt, wie in Fig. 6 dargestellt.

Die Bereiche 151 strecken sich durch das Aufblasen des Gassacks 1, so dass jeweils zwei benachbarte Bereiche 151 aneinander zur Anlage kommen und eine (entsprechend zweilagig beschaffene) Seitenwand 152 ausbilden, welche die benachbarte Kammern 11, 11' voneinander trennt; vgl. Fig. 4. Die Seitenwände 152 sind jeweils dadurch mit der Oberlage 14 fest verbunden und somit stabilisiert, dass die untere Lage 15 zwischen den in Falten gelegten Bereichen 151 jeweils über Gruppen von Längsnähten 153 an der Oberlage 14 festgelegt ist, wobei je Gruppe drei sich - bezogen auf den aufgeblasenen und montierten Zustand des Gassacks 1 - senkrecht zur Fahrzeugquerrichtung und somit entlang der Seitenwände 152 erstreckende Längsnähte 153 vorgesehen sind.

Durch die mehreren Längsnähte 153 je Längsnahtgruppe, insbesondere aufgrund des Abstandes zwischen den jeweils äußeren Längsnähten, streben die die Seitenwände 152 bildenden (vor dem Ausblasen des Gassacks gefalteten) Bereiche der unteren Lage 15 nach Aufblasen des Gassacks 1 zur Oberlage 14 hin auseinander, so dass zwischen zwei benachbarten Kammern 11 und der Oberlage 15 jeweils ein lastverteilender Zwischenraum 154 entsteht.

Abschließend werden die gefalteten Bereiche 151 in der Region der der Befüllkammer 12 zugewandten Enden 112 der Kammern 11, 11' nochmals fixiert und zwar durch unterbrochene Verschlussnähte 50, welche sowohl die in Falten gelegten Bereiche 151 der unteren Lage 15 als auch die Oberlage 14 erfassen. Dadurch werden die Enden 112 der Kammern 11, 11' teilweise verschlossen. Die Unterbrechungen der Verschlussnähte 50 erzeugen die Überströmöffnungen 121, über die in die Kammern 11, 11' einströmt und/oder bei einem Aufprall einer Person auf den Gassack 1 unter Energieabbau aus den Kammern 11, 11' verdrängt werden kann (Fig. 7). Über die Länge der Unterbrechungen der Verschlussnähte 50 lässt sich der Durchtritt der Gase in beiden Richtungen gezielt beeinflussen. Denkbar ist, dass die Unterbrechungen unterschiedliche Breiten aufweisen, so dass die Überströmöffnungen 121 unterschiedliche Überströmquerschnitte besitzen. Möglich ist natürlich auch, die Breite der Unterbrechungen der Verschlussnähte 50 identisch zu wählen. Ebenso ist es möglich, von den beschriebenen Verschlussnähten 50 abweichende Ausführungen für Überströmöffnungen zu vorzusehen, z.B. dahingehend, dass das Einströmen des von einem Gasgenerator freigesetzten Gases in die Kammern 11, 12 ungehindert erfolgen kann, während dessen Verdrängung hieraus behindert bzw. unterbunden wird.

Die erfindungsgemäße Gassackanordnung weist darüber hinaus eine bandartige Materiallage in Form eines Spannbandes 19 auf. Das Spannband 19 befindet sich an einer Außenseite des Gassacks 1 und ist über einem Mehrzahl voneinander beabstandeter Fixiernähte 191 mit der unteren Lage 15 verbunden. Die Fixiernähte 191 sind jeweils im Bereich der Kammern 11, 11' angeordnet und befinden sich somit (abwechselnd mit den Längsnähten 153) zwischen den gefalteten Bereichen 151. Es wird darauf hingewiesen, dass die Gassackanordnung auch mehr als ein Spannband 19 umfassen kann. Abweichend von der dargestellten länglichen Ausführung kann das Spannband 19 auch eine eher flächige Ausdehnung aufweisen.

Aufgrund der abschnittsweisen Faltung der die Seitenwände 152 der Kammern 11, 11' bildenden Bereiche 151 des Materialzuschnitts 154 der unteren Lage 15 sowie der Fixierung der gefalteten Bereiche 151 in der Region der Enden 111, 112 der Kammern 11, 11' weisen die Kammern 11, 11' im befüllten Zustand einen annähernd (idealisiert) rechteckigen Querschnitt auf, wobei die nach dem Befüllen der Kammern 11, 11' gestreckten Bereiche 151 benachbarter Kammern 11, 11' aneinander anliegen und gegeneinander gepresst werden. Hierdurch entsteht ein Gassack, der im Wesentlichen in seinem gesamten Auftreffbereich ein gleichmäßiges (nicht unbedingt identisches) Energieabsorptionsvermögen aufweist. Insbesondere kann eine schlechtere Energieabsorption beim Auftreffen der zu schützenden Person in einem Bereich zwischen den Kammern verhindert werden.

Es wird darauf hingewiesen, dass der dargestellte Gassack 1 zwar im gesamten Auftreffbereich eine (senkrecht zur Windschutzscheibe gemessene) konstante Dicke aufweist. Es ist jedoch auch möglich, dass die Kammern 11, 11' unterschiedliche Dicken aufweisen. Beispielsweise können die äußeren Kammern 11' dicker ausgeführt sein als die dazwischen liegenden Kammern 11 um ein Abgleiten einer aufprallenden Person vom Gassack zu verhindern.

Der Querschnitt der Kammern 11, 11' wird, wie oben bereits erwähnt, insbesondere bestimmt durch die Anzahl und Breite der Falten der gefalteten Bereiche 151, den Abstand der Längsnahtgruppen (aufweisend jeweils mehrere Längsnähte 153), den Abstand der Fixiernähte 191 sowie die Ausführung der Längsnahtgruppen. Beispielsweise verringert sich das Volumen der Zwischenräume 154 zwischen benachbarter Kammern und der Oberlage 14, wenn der Abstand der beiden äußeren Längsnähte einer Längsnahtgruppe reduziert oder nur eine Längsnaht vorgesehen wird.

Das erwähnte Aneinanderpressen benachbarter Kammern 11, 11' wird zudem auch durch die Dimensionierung des Spannbandes 19, speziell dessen Länge zwischen benachbarten Fixiernähten 191 bestimmt. Je kürzer diese Länge im Vergleich zum Abstand zwischen den Orten der Fixiernähte 191 ist, der sich ohne Spannband ergeben würde, desto stärker werden die Kammern 11, 11' aneinander gedrückt. Über die Dimensionierung des Spannbandes 19 kann auch die Krümmung des Gassackes 1 in Fahrzeugquerrichtung beeinflusst werden, wodurch eine Anpassung der Kontur des Gassacks 1 an die Kontur der Windschutzscheibe 21 möglich ist.

Eine Abwandlung der in den Fig. 3 und 4 gezeigten Konfiguration zeigt Fig. 5, wonach die Längsnahtgruppen jeweils nur zwei Längsnähte 153 aufweisen, die relativ dicht beieinander liegen, so dass sich ein kleineres Volumen der Zwischenräume 154 ergibt. Der Abstand der Längsnahtgruppen zueinander ist wesentlich größer als der Abstand zwischen den beiden jeweils einer Kammer zugeordneten Fixiernähten 191. Diese Abwandlung bewirkt eine andere Dimensionierung der Kammern 11, 11', die hier keinen rechteckigen, sondern einen im Wesentlichen trapezförmigen Querschnitt aufweisen.

### Bezugszeichenliste

- 1: Gassack
- 2: Fahrzeug
- 10: Befestigungsband
- 11, 11': Kammer
- 12: Befüllkammer
- 13: Einblasmund
- 14: Oberteil
- 15: Unterteil
- 16: Umfangsnaht
- 17: Verbindungsnaht
- 19: Spannband
- 21: Windschutzscheibe
- 22: A-Säule
- 23: Motorhaube
- 50: Verschlussnaht
- 111, 112: Ende
- 121: Überströmöffnung
- 151: gefalteter Bereich
- 152: Seitenwand
- 153: Längsnaht
- 154: Zwischenraum
- 191: Fixiernaht

## Patentansprüche

1. Gassackanordnung für ein Kraftfahrzeug, mit
- einem Gassack (1), der zum Schutz einer Person entfaltbar ist, wobei
- der Gassack (1) mindestens zwei aufblasbare Kammern (11, 11') aufweist, die durch eine Seitenwand (152) voneinander getrennt sind, wobei
- die Kammern (11, 11') durch mindestens eine gemeinsame Materiallage (15) begrenzt sind, wobei die Materiallage (15) einen im nicht aufgeblasenen Zustand des Gassacks in Falten gelegten Bereich (151) aufweist, der im aufgeblasenen Zustand des Gassacks (1) zumindest einen Abschnitt der Seitenwand (152) ausbildet,
**dadurch gekennzeichnet, dass**
die Materiallage (15) mindestens zwei im nicht aufgeblasenen Zustand des Gassacks in Falten gelegte Bereiche (151) aufweist, die im aufgeblasenen Zustand des Gassacks (1) unter Bildung der Seitenwand (152) zumindest abschnittsweise aneinander liegen.

2. Gassackanordnung nach Anspruch 1, **dadurch gekennzeichnet, dass** die Falten des in Falten gelegten Bereichs (151) in mindestens einem Abschnitt des in Falten gelegten Bereichs an der Materiallage (15) selber und/oder einer weiteren Materiallage (14) des Gassacks (1) fixiert sind.

3. Gassackanordnung nach Anspruch 1 oder 2, **dadurch gekennzeichnet, dass** der Gassack (1) einen Befüllabschnitt (12) aufweist, über den Gas in seine Kammern (11, 11') geleitet werden kann.

4. Gassackanordnung nach Anspruch 3, **dadurch gekennzeichnet, dass** die Falten des in Falten gelegten Bereich (151) in einem dem Befüllabschnitt (12) zugewandten Ende (112) des in Falten gelegten Bereich (151) fixiert sind.

5. Gassackanordnung nach Anspruch 4, **dadurch gekennzeichnet, dass** die Materiallage (15) durch einen ersten und einen zweiten Materialzuschnitt (154, 155) gebildet ist, die über mindestens eine Naht (17) miteinander verbunden sind, wobei der zweite Materialzuschnitt (155) den Befüllabschnitt (12) begrenzt, und wobei das dem Befüllabschnitt (12) zugewandte Ende (112) des in Falten gelegten Bereichs (151) über diese Naht (17 fixiert ist.

6. Gassackanordnung nach einem der Ansprüche 3 bis 5, **dadurch gekennzeichnet, dass** die Falten des in Falten gelegten Bereichs (151) in einem dem Befüllabschnitt abgewandten Ende (111) des in Falten gelegten Bereichs (151) fixiert sind.

7. Gassackanordnung nach Anspruch 6, **dadurch gekennzeichnet, dass** der Gassack (1) eine weitere Materiallage (14) aufweist, die ebenfalls die Kammern (11, 11') begrenzt und die über mindestens eine Naht (16) mit der Materiallage (15), die den in Falten gelegten Bereich (151) aufweist, verbunden ist, wobei das dem Befüllbereich (12) abgewandte Ende (111) des in Falten gelegten Bereichs (151) über diese Naht (16) an der weiteren Materiallage (14) fixiert ist.

8. Gassackanordnung nach Anspruch 7, **dadurch gekennzeichnet, dass** es sich bei der Naht (16), über die die Materiallage (15), die den in Falten gelegten Bereich (151) aufweist, mit der weiteren Materiallage (14) verbunden ist, um eine Randnaht handelt, die entlang des Umfanges der Materiallagen (14, 15) verläuft.

9. Gassackanordnung nach Anspruch 7 oder 8, **dadurch gekennzeichnet, dass** sich die Materiallage (15), die den in Falten gelegten Bereich (151) aufweist, bezogen auf den aufgeblasenen und am Fahrzeug montierten Zustand des Gassacks, dem Fahrzeug zuund die weitere Materiallage (14) dem Fahrzeug (2) abgewandt erstreckt.

10. Gassackanordnung nach einem der Ansprüche 7 bis 9, **dadurch gekennzeichnet, dass** die Materiallage (15), die den in Falten gelegten Bereich (151) aufweist, über mindestens eine Naht (153), die zumindest näherungsweise parallel zu dem in Falten gelegten Bereich (151) verläuft, mit der weiteren Materiallage (14) verbunden ist.

11. Gassackanordnung nach einem der vorhergehenden Ansprüche, **dadurch gekennzeichnet, dass** der Gassack (1) mindestens eine bandartige Materiallage (19) aufweist, die an der Materiallage (15), die den in Falten gelegten Bereich (151) aufweist, festgelegt ist.

12. Gassackanordnung nach Anspruch 11, **dadurch gekennzeichnet, dass** die Materiallage (15), die die in Falten gelegten Bereiche (151) aufweist, über mindestens eine zwischen diesen Bereichen (151) befindliche Naht (191) an der bandartigen Materiallage (19) festgelegt ist.

13. Gassackanordnung nach einem der vorhergehenden Ansprüche, **dadurch gekennzeichnet, dass** die Kammern (11, 11') länglich ausgebildet sind und zumindest annähernd parallel zueinander verlaufen.

14. Gassackanordnung nach einem der vorhergehenden Ansprüche, **dadurch gekennzeichnet, dass** der in Falten gelegte Bereich (151) durch eine Zick-Zack-Faltung gebildet ist.

15. Verfahren zum Herstellen einer Gassackanordnung, insbesondere gemäß einem der vorhergehenden Ansprüche, mit den Schritten:
- Bereitstellen einer Materiallage (15);
- Erzeugen mindestens eines im nicht aufgeblasenen Zustand des Gassacks in Falten gelegten Bereichs (151) in der Materiallage (15);
- Herstellen eines Gassacks (1) der Gassackanordnung unter Verwendung der Materiallage (15) derart, dass die Materiallagen (15) mindestens zwei durch eine Seitenwand (152) voneinander getrennte aufblasbare Kammern (11, 11') begrenzt, wobei der in Falten gelegte Bereich (151) im aufgeblasenen Zustand des Gassacks (1) zumindest einen Abschnitt der Seitenwand (152) ausbildet;
**dadurch gekennzeichnet, dass**
der Gassack (1) derart hergestellt wird, dass die Materiallage (15) mindestens zwei im nicht aufgeblasenen Zustand des Gassacks in Falten gelegte Bereiche (151) aufweist, die im aufgeblasenen Zustand des Gassacks (1) unter Bildung der Seitenwand (152) zumindest abschnittsweise aneinander liegen.

## Claims

1. Airbag arrangement for a motor vehicle, with
- an airbag (1) which can be deployed in order to protect an individual, wherein
- the airbag (1) has at least two inflatable chambers (11, 11') which are separated from each other by a side wall (152), wherein
- the chambers (11, 11') are confined by at least one common material layer (15), wherein the material layer (15) has a region (151) which is folded in the non-inflated state of the airbag and, in the inflated state of the airbag (1), forms at least one portion of the side wall (152), **characterized in that**
the material layer (15) has at least two regions (151) which are folded in the non-inflated state of the airbag and which, in the inflated state of the airbag (1), bear against one another at least in sections, forming the side wall (152).

2. Airbag arrangement according to Claim 1, **characterized in that** the folds of the folded region (151) are fixed in at least one portion of the folded region to the material layer (15) itself and/or to a further material layer (14) of the airbag (1).

3. Airbag arrangement according to Claim 1 or 2, **characterized in that** the airbag (1) has a filling portion (12) via which gas can be conducted into the chambers (11, 11') of the airbag.

4. Airbag arrangement according to Claim 3, **characterized in that** the folds of the folded region (151) are fixed at an end (112) of the folded region (151) that faces the filling portion (12).

5. Airbag arrangement according to Claim 4, **characterized in that** the material layer (15) is formed by a first and a second pre-cut material section (154, 155), which pre-cut material sections are connected to each other via at least one seam (17), wherein the second pre-cut material section (155) confines the filling portion (12), and wherein that end (112) of the folded region (151) that faces the filling portion (12) is fixed via said seam (17).

6. Airbag arrangement according to one of Claims 3 to 5, **characterized in that** the folds of the folded region (151) are fixed at an end (111) of the folded region (151) that faces away from the filling portion.

7. Airbag arrangement according to Claim 6, **characterized in that** the airbag (1) has a further material layer (14) which likewise confines the chambers (11, 11') and which is connected via at least one seam (16) to the material layer (15) which has the folded region (151), wherein that end (111) of the folded region (151) that faces away from the filling region (12) is fixed to the further material layer (14) via said seam (16).

8. Airbag arrangement according to Claim 7, **characterized in that** the seam (16) via which the material layer (15) which has the folded region (151) is connected to the further material layer (14) is an edge seam which runs along the circumference of the material layers (14, 15).

9. Airbag arrangement according to Claim 7 or 8, **characterized in that** the material layer (15) which has the folded region (151) extends facing the vehicle and the further material layer (14) extends facing away from the vehicle (2), based on the inflated state of the airbag in which the latter is mounted on the vehicle.

10. Airbag arrangement according to one of Claims 7 to 9, **characterized in that** the material layer (15) which has the folded region (151) is connected to the further material layer (14) via at least one seam (153) which runs at least approximately parallel to the folded region (151).

11. Airbag arrangement according to one of the preceding claims, **characterized in that** the airbag (1) has at least one strip-like material layer (19) which is secured on the material layer (15) which has the folded region (151).

12. Airbag arrangement according to Claim 11, **characterized in that** the material layer (15) which has the folded regions (151) is secured on the strip-like material layer (19) via at least one seam (191) located between said regions (151).

13. Airbag arrangement according to one of the preceding claims, **characterized in that** the chambers (11, 11') are of elongate design and run at least approximately parallel to each other.

14. Airbag arrangement according to one of the preceding claims, **characterized in that** the folded region (151) is formed by zigzag folding.

15. Method for producing an airbag arrangement, in particular according to one of the preceding claims, with the following steps:
- providing a material layer (15);
- producing at least one region (151), which is folded in the non-inflated state of the airbag, in the material layer (15);
- producing an airbag (1) of the airbag arrangement using the material layer (15) in such a manner that the material layer (15) confines at least two inflatable chambers (11, 11') which are separated from each other by a side wall (152), wherein, in the inflated state of the airbag (1), the folded region (151) forms at least one portion of the side wall (152);
**characterized in that**
the airbag (1) is produced in such a manner that the material layer (15) has at least two regions (151) which are folded in the non-inflated state of the airbag and, in the inflated state of the airbag (1), bear against one another at least in sections, forming the side wall (152).

## Revendications

1. Agencement de coussin d'air pour un véhicule automobile, comprenant
- un coussin d'air (1) qui peut être déployé pour protéger une personne,
- le coussin d'air (1) présentant au moins deux chambres gonflables (11, 11') qui sont séparées l'une de l'autre par une paroi latérale (152),
- les chambres (11, 11') étant limitées par au moins une couche de matériau commune (15), la couche de matériau (15) présentant une région repliée (151) dans l'état non gonflé du coussin d'air, qui constitue, dans l'état gonflé du coussin d'air (1), au moins une portion de la paroi latérale (152),
**caractérisé en ce que**
la couche de matériau (15) présente au moins deux régions (151) repliées dans l'état non gonflé du coussin d'air, qui sont au moins en partie appliquées l'une contre l'autre dans l'état gonflé du coussin d'air (1) en formant la paroi latérale (152).

2. Agencement de coussin d'air selon la revendication 1, **caractérisé en ce que** les plis de la région repliée (151) sont fixés dans moins une portion de la région repliée au niveau de la couche de matériau (15) elle-même et/ou au niveau d'une couche de matériau supplémentaire (14) du coussin d'air (1).

3. Agencement de coussin d'air selon la revendication 1 ou 2, **caractérisé en ce que** le coussin d'air (1) présente une portion de remplissage (12) par le biais de laquelle du gaz peut être guidé dans ses chambres (11, 11').

4. Agencement de coussin d'air selon la revendication 3, **caractérisé en ce que** les plis de la région (151) repliée sont fixés dans une extrémité (112) de la région repliée (151) tournée vers la portion de remplissage (12).

5. Agencement de coussin d'air selon la revendication 4, **caractérisé en ce que** la couche de matériau (15) est formée par une première et une deuxième pièce découpée de matériau (154, 155), lesquelles sont reliées l'une à l'autre par le biais d'au moins une couture (17), la deuxième pièce découpée de matériau (155) délimitant la portion de remplissage (12), et l'extrémité (112) de la région repliée (151) tournée vers la portion de remplissage (12) étant fixée par le biais de cette couture (17).

6. Agencement de coussin d'air selon l'une quelconque des revendications 3 à 5, **caractérisé en ce que** les plis de la région repliée (151) sont fixés dans une extrémité (111) de la région repliée (151) opposée à la portion de remplissage.

7. Agencement de coussin d'air selon la revendication 6, **caractérisé en ce que** le coussin d'air (1) présente une couche de matériau supplémentaire (14) qui délimite également les chambres (11, 11') et qui est connectée par le biais d'au moins une couture (16) à la couche de matériau (15) qui présente la région repliée (151), l'extrémité (111) de la région repliée (151) opposée à la région de remplissage (12) étant fixée par le biais de cette couture (16) à la couche de matériau supplémentaire (14).

8. Agencement de coussin d'air selon la revendication 7, **caractérisé en ce que** la couture (16) par le biais de laquelle la couche de matériau (15) qui présente la région repliée (151) est connectée à la couche de matériau supplémentaire (14) est une couture de bord qui s'étend le long de la périphérie des couches de matériau (14, 15).

9. Agencement de coussin d'air selon la revendication 7 ou 8, **caractérisé en ce que** la couche de matériau (15) qui présente la région repliée (151), par rapport à l'état gonflé et monté sur le véhicule du coussin d'air, s'étend en direction du véhicule et la couche de matériau supplémentaire (14) s'étend à l'opposé du véhicule (2).

10. Agencement de coussin d'air selon l'une quelconque des revendications 7 à 9, **caractérisé en ce que** la couche de matériau (15) qui présente la région repliée (151) est connectée à la couche de matériau supplémentaire (14) par le biais d'au moins une couture (153) qui s'étend au moins approximativement parallèlement à la région repliée (151).

11. Agencement de coussin d'air selon l'une quelconque des revendications précédentes, **caractérisé en ce que** le coussin d'air (1) présente au moins une couche de matériau de type bande (19) qui est fixée à la couche de matériau (15) qui présente la région repliée (151).

12. Agencement de coussin d'air selon la revendication 11, **caractérisé en ce que** la couche de matériau (15) qui présente les régions repliées (151) est fixée à la couche de matériau de type bande (19) par le biais d'au moins une couture (191) se trouvant entre ces régions (151).

13. Agencement de coussin d'air selon l'une quelconque des revendications précédentes, **caractérisé en ce que** les chambres (11, 11') sont réalisées sous forme allongée et s'étendent au moins approximativement parallèlement l'une à l'autre.

14. Agencement de coussin d'air selon l'une quelconque des revendications précédentes, **caractérisé en ce que** la région repliée (151) est formée par un pli en zigzag.

15. Procédé de fabrication d'un agencement de coussin d'air, en particulier selon l'une quelconque des revendications précédentes, comprenant les étapes suivantes :
- fournir une couche de matériau (15) ;
- produire dans la couche de matériau (15) au moins une région repliée (151) dans l'état non gonflé du coussin d'air ;
- produire un coussin d'air (1) de l'agencement de coussin d'air en utilisant la couche de matériau (15) de telle sorte que la couche de matériau (15) délimite au moins deux chambres gonflables (11, 11') séparées l'une de l'autre par une paroi latérale (152), la région repliée (151), dans l'état gonflé du coussin d'air (1), constituant au moins une portion de la paroi latérale (152) ;
**caractérisé en ce que**
le coussin d'air (1) est produit de telle sorte que la couche de matériau (15) présente au moins deux régions repliées (151) dans l'état non gonflé du coussin d'air, lesquelles s'appliquent au moins en partie l'une contre l'autre dans l'état gonflé du coussin d'air (1) en formant la paroi latérale (152).
